(19) Europäisches Patentamt
European Patent Office
Office européen des brevets

(11) **EP 0 969 197 B1**

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(51) Int Cl.⁷: **F02M 25/08**

(21) Anmeldenummer: **98112220.3**

(22) Anmeldetag: **02.07.1998**

(54) **Verbrennugskraftmaschine mit Direkteinspritzung**

Direct injected internal combustion engine

Moteur à combustion interne à injection directe

(84) Benannte Vertragsstaaten:
**DE FR GB**

(43) Veröffentlichungstag der Anmeldung:
**05.01.2000 Patentblatt 2000/01**

(73) Patentinhaber: **Ford Global Technologies, Inc.**
**Dearborn, Michigan 48126-2490 (US)**

(72) Erfinder: **Phlips, Patrick**
**50858 Köln (DE)**

(74) Vertreter: **Drömer, Hans-Carsten, Dipl.-Ing.**
**Ford-Werke Aktiengesellschaft,**
**Patentabteilung NH/DRP,**
**Henry-Ford-Strasse 1**
**50725 Köln (DE)**

(56) Entgegenhaltungen:
**EP-A- 0 488 254       DE-A- 19 547 916**
**DE-A- 19 650 517**

**Beschreibung**

Die Erfindung betrifft eine Verbrennungskraftmaschine mit Direkteinspritzung, bei der die Einspritzung des Kraftstoffes sowohl während des Ansaugtaktes als auch während des Verdichtungstaktes erfolgen kann.

Eine derartige Verbrennungskraftmaschine ist in EP 0 369 480 A2 beschrieben. Demzufolge wird bei einer Verbrennungskraftmaschine mit einem Kolben, welcher sich in einem Zylinder befindet und mit einer Zündkerze im Zylinderkopf sowie mit Mitteln zur Einspritzung von Treibstoff direkt in den Zylinder und Sensoren zur Bestimmung des Betriebszustandes und mit Berechnungseinrichtungen zur Bestimmung der aufgrund des Betriebszustandes notwendigen Kraftstoffmenge schließlich mit Kontrolleinrichtungen für die einzuspritzende Kraftstoffmenge, die Kraftstoffeinspritzung so gestaltet, daß bei einer erforderlichen Kraftstoffmenge, die kleiner ist als ein Schwellwert, die Einspritzung im Verdichtungstakt erfolgt und daß, wenn die berechnete Kraftstoffmenge größer ist als der Schwellwert einen Teil des Kraftstoffes während des Ansaugtaktes eingespritzt wird.

Aus EPA-0 488 254 ist eine Verbrennungskraftmaschine mit Kolben, Zylinder, Zündkerze sowie einer Einspritzeinrichtung für Kraftstoffdirekteinspritzung, welche mit einem Kraftstoffdampf-Sammelbehälter verbindbar ist, Sensoren zur Bestimmung des Betriebszustandes, Berechnungseinrichtungen für die Ermittlung der einzuspritzenden Benzinmenge in Abhängigkeit vom Betriebszustand und Steuer/Regeleinrichtung zur Dosierung der einzuspritzenden Kraftstoffmenge, wobei oberhalb einer minimalen Last im Teillastbetrieb ein Teil des Kraftstoffes während eines Ansaugtaktes eingespritzt wird bekannt, wobei jedoch die gesamte Kraftstoffmenge nur im Verdichtungstakt eingespritzt wird. Hierdurch kann ein zündfähiges Benzingemisch sich in allen Betriebszuständen entstehen. Aufgabe der Erfindung war es daher, auch bei sehr geringer Last ein zündfähiges Benzingemisch zu erzeugen.

Der Schwellwert ist eine Kraftstoffmenge, die einer bestimmten minimalen Last entspricht. Bei dieser Art der Direkteinspritzung wird nicht berücksichtigt, daß der aufgrund gesetzlicher Vorschrift erforderliche Kraftstoffdampf-Sammelbehälter in erforderlichen Abständen geleert werden muß, indem z.B. die Ansaugluft durch den Sammelbehälter geführt und so mit Kraftstoff angereichert wird. Das Problem dabei ist, daß die mit dem Kraftstoffdampf aus dem Sammelbehälter angereicherte Ansaugluft keine brennbare Mischung ergibt, so daß im Teillastbetrieb, also bei einer Last unterhalb der minimalen Last, welche den Kraftstoffschwellwert definiert, zwar durch die Direkteinspritzung unmittelbar an der Zündkerze ein zündfähiges Gemisch entsteht. Dieses Gemisch brennt aber nicht bis in die den Brennraum umgebende

Bereiche des Zylinders aus. Damit würden sich die nicht verbrannten Kohlenwasserstoffe im Abgas befinden und zu entsprechenden unerwünschten Immissionen oder für die nachfolgenden Aggregate, wie z.B. den Katalysator, zu unerwünschten Betriebsbedingungen führen.

Bei der Spülung des Kraftstoffdampf-Sammelbehälters wird daher vorgeschlagen, für eine berechnete Kraftstoffmenge, die kleiner ist als ein durch eine minimale Last bestimmter Kraftstoffmengenschwellwert einen Teil der berechneten Kraftstoffmenge im Ansaugtakt einzuspritzen, obwohl an sich, gemessen an der Last, die Einspritzung im Verdichtungstakt ausreichen würde, um die geforderte Leistung bereitzustellen. Die erforderliche Kraftstoffmenge wird auf der Grundlage der Umdrehungsgeschwindigkeit der Verbrennungskraftmaschine und der Beschleunigungsanforderung, z. B. der Stellung des Gaspedals ermitteln. Der Kraftstoffmengenschwellwert bis zu dem die späte Direkteinspritzung in den Verdichtungstakt erfolgt, entspricht einer Last, die im homogenen (geschichteten) Betrieb im Zylinder mit den geforderten Abgaswerten gerade noch erreichbar ist.

Durch die zusätzliche Einspritzung von Kraftstoff auch im Ansaugtakt bei Spülung des Kraftstoffdampf-Sammelbehälters kann auch in Bereichen außerhalb des zündkerzennahen Brennraumes zusammen mit dem Kraftstoffdampf-Luft-Gemisch eine brennbare Mischung eingestellt werden. In diesem Betriebszustand befindet sich also einerseits unmittelbar an der Zündkerze durch die Direkteinspritzung im Verdichtungstakt ein zündbares Gemisch. Andererseits ist außerhalb des Brennraumes ein die Flammenausbreitung ermöglichendes Gemisch gegeben. Im Zylinder erfolgt somit sowohl eine geschichtete (zündkerzennahe) als auch eine Magerverbrennung im übrigen Raum des Zylinders.

Der Kraftstoffmengenschwellwert, welcher der definierten minimalen Last entspricht, beinhaltet sowohl den in der Ansaugluft befindlichen Kraftstoffdampf als auch die im Ansaugtakt zur Erzeugung eines brennbaren Gemisches erforderliche Kraftstoffmenge als auch die für die Einspritzung im Verdichtungstakt vorgesehene Kraftstoffmenge.

$$Q_S = Q_D + Q_A + Q_V$$

$Q_S$ = Kraftstoffmengenschwellwert
$Q_D$ = Kraftstoffmenge in Form des Kraftstoffdampfes
$Q_A$ = Kraftstoffmenge im Ansaugtakt einzuspritzen
$Q_V$ = Kraftstoffmenge im Verdichtungstakt einzuspritzen

Anhand der beigefügten schematischen Darstellungen wird die Erfindung näher erläutert.

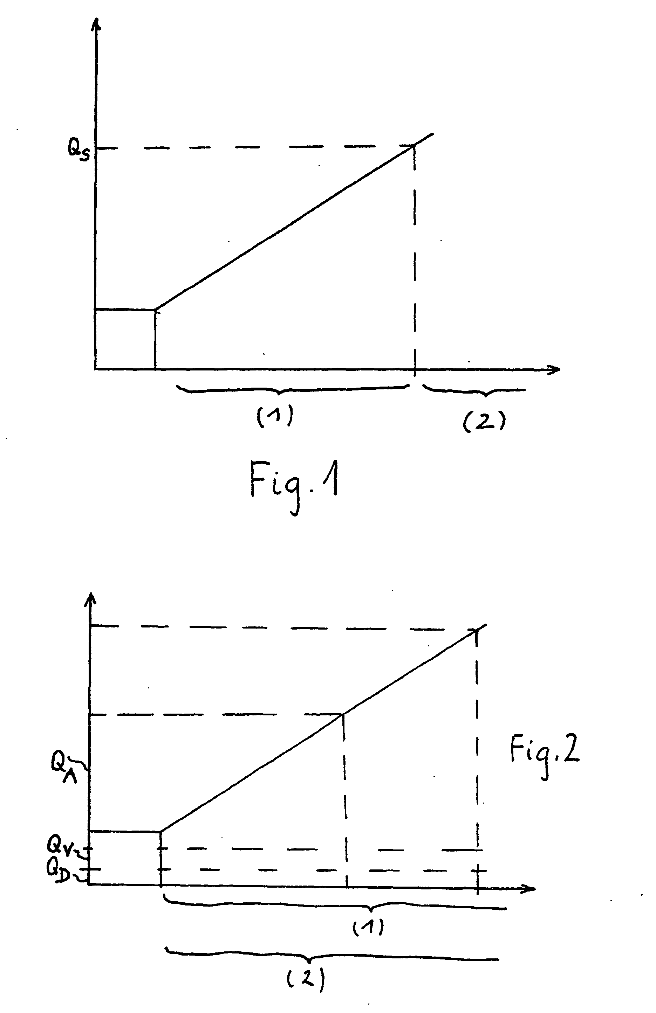

Fig. 1 zeigt ein aus dem genannten Stand der Technik bekanntes Diagramm. Auf der Abszisse ist die Last, auf der Ordinate die berechnete Kraftstoffmenge aufgetragen. Bei einer der bestimmten minimalen Last entsprechenden Kraftstoffmenge $Q_S$ (Kraftstoffmengenschwellwert) reicht die spätere Einspritzung im Verdichtungstakt (1) nicht mehr aus, um die geforderte weitere Leistung abzugeben. Für höhere Leistungen erfolgt daher die zusätzliche Einspritzung im Ansaugtakt (2).

Fig. 2 zeigt die Kraftstoffeinspritzung bei Berücksichtigung der durch die Spülung des Kraftstoffdampf-Sammelbehälters der Verbrennungskraftmaschine zugeführte Kraftstoffdampfmenge. Würde diese Kraftstoffdampfmenge bei der nach dem Stand der Technik vorgesehenen Einspritzung dem Motor zugeführt, so würde eine nicht ausreichende Verbrennung des Kraftstoffdampfes im Teillastbetrieb, also unterhalb der minimalen Last, welche dem Kraftstoffmengenschwellwert entspricht, erfolgen. Es ist daher vorgesehen, unterhalb der minimalen Last eine Kraftstoffmenge zusätzlich zur Einspritzung im Verdichtungstakt auch im Ansaugtakt einzuspritzen. Die im Ansaugtakt einzuspritzende Kraftstoffmenge wird so bemessen, daß außerhalb des zündkerzennahen Brennraumes ein die Flammenausbreitung ermöglichendes Gemisch vorliegt. Die im Verdichtungstakt einzuspritzende Kraftstoffmenge wird so bestimmt, daß im zündkerzennahen Bereich ein zündfähiges Gemisch vorliegt. Dabei wird sowohl die durch die Spülung des Kraftstoffdampf-Sammelbehälters dem Zylinder zugefügte Kraftstoffmenge als auch die im Ansaugtakt zugeführte Kraftstoffmenge bei der Bestimmung der im Verdichtungstakt einzuspritzenden Kraftstoffmenge berücksichtigt. Damit befindet sich bei Beginn der Einspritzung im Verdichtungstakt im Zylinder bereits ein die Flammenausbreitung erlaubendes Magergemisch. Diesem wird mit der Einspritzung im Verdichtungstakt in den zündkerzennahen Bereich ein zündfähiges Gemisch überlagert.

Bevorzugt wird unter Berücksichtigung des bereits im Zylinder vorhandenen Gemisches die Einspritzzeit für die Einspritzung im Verdichtungstakt verkürzt.

Zusätzlich zu den üblichen Sensoren können solche zur Bestimmung der Kraftstoffdampfkonzentration in der Ansaugluft bei Spülung des Kraftstoffdampf-Sammelbehälters sowie Drucksensoren für den Brennraum schließlich auch Sensoren zur Ermittlung der Umdrehungsgeschwindigkeit der Kurbelwelle sowie zusätzliche Sensoren zur Bestimmung der Abgaszusammensetzung vorgesehen sein.

## Patentansprüche

1. Verbrennungskraftmaschine mit Kolben, Zylinder, Zündkerze sowie einer Einspritzeinrichtung für Kraftstoffdirekteinspritzung, welche mit einem Kraftstoffdampf-Sammelbehälter verbindbar ist, Sensoren zur Bestimmung des Betriebszustandes, Berechnungseinrichtungen für die Ermittlung der einzuspritzenden Benzinmenge in Abhängigkeit vom Betriebszustand und Steuer/Regeleinrichtung zur Dosierung der einzuspritzenden Kraftstoffmenge, wobei oberhalb einer minimalen Last im Teillastbetrieb ein Teil des Kraftstoffes während eines Ansaugtaktes eingespritzt wird, **dadurch gekennzeichnet, dass** bei Spülung des Kraftstoffdampf-Sammelbehälters auch unterhalb der minimalen Last ein Teil einer berechneten Kraftstoffmenge ebenfalls im Ansaugtakt eingespritzt wird, so dass unterhalb des Teillastbetriebes eine Kraftstoffmenge zusätzlich zur Einspritzung in einem Verdichtungsakt auch im Ansaugtakt eingespritzt wird.

2. Verbrennungskraftmaschine nach Anspruch 1, **dadurch gekennzeichnet, daß**

   - der im Ansaugtakt eingespritzte Anteil ($Q_A$) zusammen mit dem Kraftstoffdampf ($Q_D$) eine Luft-Kraftstoffmischung ergibt, in der eine Flammenausbreitung erfolgt, selbst wenn das Gemisch gleichmäßig im Zylinder verteilt ist.

3. Verbrennungskraftmaschine nach Anspruch 2, **dadurch gekennzeichnet, daß**

   - die im Verdichtungstakt einzuspritzende Kraftstoffmenge an der Zündkerze eine zündbare Mischung ergibt.

4. Verbrennungskraftmaschine nach einem der Ansprüche 1 - 3, **dadurch gekennzeichnet, daß**

   - der Kraftstoffmengenschwellwert einer Summe aus der Kraftstoffdampfmenge ($Q_D$) und der Ansaugtakt-Kraftstoffmenge ($Q_A$) und einer Kraftstoffmenge ($Q_V$) entspricht.

## Claims

1. Internal combustion engine with a piston, cylinder, spark plug and an injection device for direct fuel injection, which can be connected to a fuel-vapour collecting container, sensors for determining the operating state, calculating devices for determining the quantity of gasoline to be injected as a function of the operating state, and a control/regulating device for metering the quantity of fuel to be injected, some of the fuel being injected during an intake stroke above a minimum load in the part-load range, **characterized in that** some of a calculated quantity of fuel is also injected during the intake stroke below the minimum load when the fuel-vapour collecting container is being purged, with the result that a quantity of fuel is injected during the intake stroke in addition to the injection during a compression stroke below the part-load range.

**2.** Internal combustion engine according to Claim 1, **characterized in that**

- together with the fuel vapour ($Q_D$), that portion ($Q_A$) which is injected during the intake stroke produces an air/fuel mixture in which flame propagation occurs even if the mixture is uniformly distributed in the cylinder.

**3.** Internal combustion engine according to Claim 2, **characterized in that**

- the quantity of fuel to be injected during the compression stroke results in an ignitable mixture at the spark plug.

**4.** Internal combustion engine according to one of Claims 1-3, **characterized in that**

- the fuel-quantity threshold value corresponds to a sum of the quantity of fuel vapour ($Q_D$) and the quantity of fuel ($Q_A$) for the intake stroke and a quantity of fuel ($Q_V$).

**Revendications**

**1.** Moteur à combustion interne avec pistons, cylindres, bougies d'allumage ainsi qu'un dispositif d'injection pour l'injection directe de carburant, qui peut être raccordé à un réservoir collecteur de vapeur de carburant, avec des capteurs pour déterminer l'état de fonctionnement, des dispositifs de calcul pour déterminer la quantité d'essence à injecter en fonction de l'état de fonctionnement et un dispositif de commande/régulation pour doser la quantité de carburant à injecter, une partie du carburant étant injectée pendant un temps d'aspiration au-dessus d'une charge minimale en fonctionnement de charge partielle, **caractérisé en ce que** lors de la purge du réservoir collecteur de vapeur de carburant également en dessous de la charge minimale, une partie de la quantité de carburant calculée est également injectée dans le temps d'aspiration, de sorte qu'en dessous du fonctionnement en charge partielle, une quantité de carburant soit injectée dans le temps d'aspiration en plus de l'injection dans un temps de compression.

**2.** Moteur à combustion interne selon la revendication 1,
**caractérisé en ce que**

- la proportion injectée ($Q_A$) pendant le temps d'aspiration conjointement avec la vapeur de carburant ($Q_D$) produit un mélange air-carburant dans lequel se produit un élargissement de la flamme même lorsque le mélange est réparti uniformément dans le cylindre.

**3.** Moteur à combustion interne selon la revendication 2,
**caractérisé en ce que**

- la quantité de carburant à injecter dans le temps de compression produit un mélange inflammable au niveau de la bougie d'allumage.

**4.** Moteur à combustion interne selon l'une quelconque des revendications 1 à 3,
**caractérisé en ce que**

- la valeur seuil de la quantité de carburant correspond à une somme de la quantité de vapeur de carburant ($Q_D$) et de la quantité de carburant ($Q_A$) pendant le temps d'aspiration et d'une quantité de carburant ($Q_V$).

Fig. 1

Fig. 2